# EUROPÄISCHE PATENTANMELDUNG

(11) **EP 4 524 562 A2**
(43) Veröffentlichungstag der Anmeldung: **19.03.2025**
(21) Anmeldenummer: 25155711.2
(22) Anmeldetag: 11.11.2021
(51) Int. Cl.: G01N 31/22

(54) **ABLAUF FÜR EINEN SANITÄRBEREICH**

(30) Priorität: 23.11.2020 DE 202020106719 U
(62) Teilanmeldung aus: 21207679.8
(71) Anmelder: Viega Technology GmbH & Co. KG, 57439 Attendorn (DE)
(72) Erfinder: Hennes, Frank, 57413 Finnentrop (DE); Görke, Daniel, 57368 Lennestadt (DE)
(74) Vertreter: Cohausz & Florack

(57) **Zusammenfassung**

Die vorliegende Erfindung betrifft einen Ablauf (3) für einen Sanitärbereich, insbesondere für eine Bade- oder Duschwanne (2) oder als Bodenablauf, mit einem Ablaufgehäuse (3.1), wobei das Ablaufgehäuse (3.1) zumindest teilweise transparent ausgebildet ist, derart, dass zumindest ein Gehäusesegment (3.3), welches eine Außenfläche des Ablaufgehäuses (3.1) definiert, transparent ist, wobei das transparente Ablaufgehäuse (3.1) oder Gehäusesegment (3.3) zur Feststellung einer unzulässigen Feuchte in einer Umgebung der Außenfläche des Ablaufgehäuses (3.1) hergerichtet ist. Die Erfindung betrifft insbesondere die Verwendung eines solchen Ablaufs in Kombination mit einer Bade- oder Duschwanne.

## Beschreibung

Die Erfindung betrifft einen Ablauf für einen Sanitärbereich, insbesondere für eine Bade- oder Duschwanne oder als Bodenablauf, mit einem Ablaufgehäuse. Die Erfindung betrifft insbesondere die Verwendung eines solchen Ablaufs in Kombination mit einer Bade- oder Duschwanne.

In Sanitärbereichen kann es zu ungewollten Feuchtigkeitseinträgen in Hohlräume unter oder hinter Sanitärgegenstände kommen. Beispielsweise kann es bei eingebauten Duschwannen vorkommen, dass über eine fehlerhaft hergestellte oder im Laufe der Zeit beschädigte Dichtungsfuge (Silikonnaht) im Randbereich der Duschwanne unbemerkt Feuchtigkeit in einen durch die Duschwanne und einen Beton- oder Estrichboden begrenzten Hohlraum gelangt. Solche unbemerkten Feuchtigkeitseinträge unter oder hinter Sanitärgegenstände können weitreichende Feuchtigkeitsschäden verursachen, die häufig erst sehr spät bemerkt werden und dann einen hohen Sanierungsaufwand erfordern. Entsprechende Feuchtigkeitseinträge wurden mitunter auch bei Badewannen und Bodenabläufen, insbesondere bei Bodenabläufen in bodengleichen Duschen festgestellt.

Der Erfindung liegt die Aufgabe zugrunde, eine technische Lösung zu schaffen, die es relativ kostengünstig ermöglicht, einen ungewollten Feuchtigkeitseintrag in einen Hohlraum eines Sanitärbereichs, zum Beispiel in einen Hohlraum unter oder hinter einem Sanitärgegenstand, frühzeitig zu erkennen.

Gelöst wird diese Aufgabe durch einen Ablauf mit den in Anspruch 1 angegebenen Merkmalen. Vorteilhafte Ausgestaltungen des erfindungsgemäßen Ablaufs sind in den Unteransprüchen angegeben.

Der erfindungsgemäße Ablauf weist ein Ablaufgehäuse auf, das zumindest teilweise transparent ausgebildet ist, derart, dass zumindest ein Gehäusesegment, welches eine Außenfläche des Ablaufgehäuses definiert, transparent ist, wobei das transparente Ablaufgehäuse oder Gehäusesegment zur Feststellung einer unzulässigen Feuchte in einer Umgebung der Außenfläche des Ablaufgehäuses hergerichtet ist.

Unter dem Adjektiv "transparent" wird in Bezug auf die vorliegende Erfindung, insbesondere in Bezug auf die beigefügten Ansprüche, die optische Eigenschaft eines Materials verstanden, Licht hindurchzulassen. Das Material bzw. Gehäuse oder Gehäusesegment ist also für Strahlung des sichtbaren Spektrums weitgehend oder zumindest teilweise durchlässig. Das Adjektiv "transparent" umfasst in Bezug auf die vorliegende Erfindung alle Varianten von lichtdurchlässigen Materialen. Beispielsweise ist das Material des transparenten Ablaufgehäuses oder transparenten Gehäusesegments des erfindungsgemäßen Ablaufs so ausgewählt oder ausgeführt, dass es zumindest eine Farbe weitgehend oder teilweise durchscheinen lässt. Die optische Eigenschaft des transparenten Materials kann dabei beispielsweise der Eigenschaft von gewöhnlichem Glas (z. B. Fensterglas), Milchglas, mäßig getöntem oder farbigem Glas (z. B. Rauchglas), Acrylglas, Transparentpapier oder Transparentfolie entsprechen.

Das transparente Ablaufgehäuse oder transparente Gehäusesegment des erfindungsgemäßen Ablaufs kann auch als durchsichtiges Ablaufgehäuse oder durchsichtiges Gehäusesegment bezeichnet werden.

Die Erfindung umfasst insbesondere Ausführungsformen eines Ablaufs, bei denen das Ablaufgehäuse einen transparenten Ablaufkörper aufweist oder aus einem transparenten Ablaufgehäuse besteht.

In einer einfachen Ausführungsform der Erfindung kann das transparente Gehäusesegment des Ablaufgehäuses zum Beispiel nach Art eines transparenten, wasserdichten Sichtfensters ausgebildet sein, durch das ein Hohlraum unter oder hinter einem Sanitärgegenstand oder ein Hohlraum unter einem Sanitärbereich auf das Vorhandensein einer anormalen oder inakzeptablen Feuchte überprüft werden kann.

Das transparente Gehäusesegment kann beispielsweise so an dem Ablaufgehäuse angeordnet sein, dass zumindest ein fensterförmiger Abschnitt des transparenten Gehäusesegments an einer für eine optische Prüfung gut zugänglichen Stelle des Ablaufgehäuses liegt, wobei diese Stelle bzw. der fensterförmige Abschnitt vorzugsweise oberhalb eines Wasserspiegels, z. B. Sperrwasserspiegels liegt, der sich in dem Ablaufgehäuse beim üblichen Gebrauch des Ablaufs ergibt. Somit kann ein Nutzer oder Sanitärinstallateur für eine Prüfung, ob im Hohlraum hinter dem Ablaufgehäuse unzulässige Feuchte herrscht, die dem Hohlraum abgewandte Seite des sichtbaren Abschnitts des transparenten Gehäusesegments mit kaltem Wasser beaufschlagen, um die Oberflächentemperatur der dem Hohlraum zugewandten Außenfläche des transparenten Gehäusesegments soweit zu verringern, dass aufgrund unzulässiger Feuchte im Hohlraum vorhandener Wasserdampf an dem Flächenabschnitt kondensiert. So kann geprüft werden, ob Leckagewasser bzw. unzulässige Feuchtigkeit in den Hohlraum gelangt ist.

Eine vorteilhafte Ausgestaltung der Erfindung ist dadurch gekennzeichnet, dass das transparente Ablaufgehäuse bzw. das transparente Gehäusesegment mit einem Anzeigemittel zur Anzeige einer unzulässigen Feuchte, vorzugsweise Luftfeuchte, in der Umgebung der Außenfläche des Ablaufgehäuses versehen ist. Durch diese Ausgestaltung lässt sich ein Feuchtigkeitseintrag in einen Hohlraum hinter oder unter einem Sanitärgegenstand relativ einfach und zuverlässig detektieren.

Das Anzeigemittel zur Anzeige einer unzulässigen Feuchte ist beispielsweise aus einem Substrat gebildet, das ein Indikatormaterial aufweist, welches die Eigenschaft hat oder ausgeführt ist, eine unzulässige Feuchte anzuzeigen. Das Substrat bzw. Indikatormaterial kann vorhandene Feuchtigkeit in einem zu überwachenden Hohlraum beispielsweise durch einen Farbumschlag anzeigen, bei dem das Indikatormaterial eine feuchtigkeitsabhängige Farbe aufweist und/oder seine Farbe in Abhängigkeit der vorhandenen Feuchtigkeit ändert. Das Indikatormaterial kann auch als Indikator oder Indikatorstoff bezeichnet werden.

Der Feuchtigkeitsindikator bzw. das Indikatormaterial zur Anzeige von Feuchtigkeit kann nach einer Ausgestaltung der Erfindung auf einem Trägermaterial, beispielsweise einem Papier oder einer Folie, aufgebracht sein, wobei das Trägermaterial im Bereich des transparenten Ablaufgehäuses oder transparenten Gehäusesegments befestigt werden kann. Auch liegt es im Rahmen der Erfindung, dass ein als Feuchtigkeitsindikator hergerichtetes Substrat auf der dem Hohlraum zugewandten Seite des transparenten Ablaufgehäuses oder Gehäusesegments aufgebracht ist, wobei in diesem Fall das Gehäuse bzw. Gehäusesegment auch als Träger für das Substrat bzw. den Feuchtigkeitsindikator dient.

Des Weiteren liegt es im Rahmen der Erfindung, dass das Anzeigemittel zur Anzeige einer unzulässigen Feuchte als Messinstrument, beispielsweise als Hygrometer, insbesondere als analoges Hygrometer ausgeführt ist. Das Anzeigemittel bzw. Messinstrument kann dabei eine digitale oder analoge Anzeige aufweisen. Die Ausführung des Anzeigemittels als analoges Hygrometer ist hat den Vorteil einer Wartungsfreiheit bzw. hohen Lebensdauer des Anzeigemittels.

In weiterer Ausgestaltung des erfindungsgemäßen Ablaufs kann das Anzeigemittel lösbar oder fest mit dem transparenten Ablaufgehäuse oder Gehäusesegment verbunden sein. Eine lösbare Verbindung des Anzeigemittels mit dem transparenten Gehäusesegment ist von Vorteil, wenn das Anzeigemittel aus Wartungs- oder Erneuerungsgründen von dem transparenten Gehäusesegment entfernt werden soll. Die lösbare Verbindung kann hierzu beispielsweise als lösbare Formschlussverbindung, insbesondere als lösbare Rastverbindung, oder als Klemmverbindung ausgeführt sein. Eine feste Verbindung des Anzeigemittels mit dem transparenten Gehäusesegment ist von Vorteil, wenn eine stabile und dauerhafte Positionierung des Anzeigemittels an dem transparenten Gehäuse oder Gehäusesegment gewünscht ist. Die feste Verbindung lässt sich beispielsweise als stoffschlüssige Verbindung, insbesondere als Klebeverbindung realisieren.

Eine weitere vorteilhafte Ausgestaltung des erfindungsgemäßen Ablaufs ist dadurch gekennzeichnet, dass das Indikatormaterial des Substrats in Bezug auf eine unzulässige Feuchte reversibel reagiert. Hierdurch wird sichergestellt, dass die Funktion des Indikatormaterials nicht lediglich einmalig, sondern zu verschiedenen Zeitpunkten mehrfach, vorzugsweise beliebig oft, zur Identifikation von unzulässiger Feuchte genutzt werden kann. Beispielsweise ermöglicht diese Ausgestaltung, dass das Ablaufgehäuse des erfindungsgemäßen Ablaufs zusammen mit dem Indikatormaterial bereits während der Bauphase oder einer Zeitphase installiert wird, in welcher am Einbauort anfänglich eine relativ hohe Feuchte herrscht oder auftritt, etwa weil am Einbauort feuchtes Baumaterial wie Mörtel, Estrich oder Fliesenkleber eingebracht wird, wobei diese anfängliche Feuchte aber durch normale Trocknung schnell wegfällt und normalerweise nicht zu Feuchtigkeitsschäden führt. Eine Identifikation dieser anfänglichen, später nicht mehr vorhandenen Feuchte ist daher kaum sinnvoll. Die Funktion des Indikatormaterials ist somit reversibel, so dass mögliche Feuchtigkeit während der Bauphase die gewünschte spätere Indikatorfunktion nicht beeinträchtigt oder aufhebt.

Das Indikatormaterial macht Feuchtigkeit beispielsweise durch eine Farbänderung sichtbar.

Nach einer weiteren Ausgestaltung der Erfindung ist das Indikatormaterial des Substrats derart ausgewählt oder ausgebildet, dass seine Reaktion auf unzulässige Feuchte und damit seine Indikatorfunktion durch Wärmeeinwirkung zumindest teilweise, vorzugsweise weitgehend oder vollständig reversiert, d.h. zurückgesetzt werden.

Als Indikatormaterial bzw. Feuchtigkeitsindikator können verschiedene reversible Stoffe oder Substrate verwendet werden. Beispielsweise kann es sich bei dem Indikatormaterial des erfindungsmäßen Ablaufs um ein Material aus oder auf Basis von Cobalt-II-Chlorid handeln, dessen Indikatorfunktion beispielsweise durch Erwärmung auf eine Temperatur von über 35° C reversiert werden kann. Somit lässt sich der Feuchtigkeitsindikator durch Spülen des Ablaufgehäuses mit entsprechend heißem Wasser zurücksetzen. Bei einer Bade- oder Duschwanne mit einem Ablaufgehäuse, das auf seiner Außenfläche mit einem solchen Feuchtigkeitsindikator ausgestattet ist, lässt sich der Feuchtigkeitsindikator somit insbesondere durch heißes Duschen zurücksetzen.

Eine weitere vorteilhafte Ausgestaltung des erfindungsgemäßen Ablaufs ist dadurch gekennzeichnet, dass das Substrat und/oder das Indikatormaterial hygroskopisch sind/ist. Hierdurch lässt sich eine Wasserabsorption aus feuchter Luft und damit eine frühzeitige Detektion einer unzulässig hohen Luftfeuchte erzielen.

Beispielsweise kann das Anzeigemittel zur Anzeige einer unzulässigen Feuchte, mit welchem das Ablaufgehäuse auf seiner Außenfläche ausgestattet ist, auf einem hygroskopischen Substrat basieren, das als Indikatormaterial einen Farbstoff enthält, dessen Farbe sich in Abhängigkeit des Wassergehaltes des Substrats verändert. Das Indikatormaterial ermöglicht so eine einfache Beurteilung über die Wasserbeladung des hygroskopischen Substrats.

Als hygroskopisches Substrat kann bei dem erfindungsgemäßen Ablauf zum Beispiel Silikagel - auch Kieselgel genannt - verwendet werden. Um die Beladung des hygroskopischen Substrats mit Wasser auf einfache Weise optisch beurteilen zu können, wird dem Substrat ein Farbstoff als Indikatormaterial beigemischt. Ein hierzu geeigneter Farbstoff ist Cobalt-II-Chlorid, das im trockenen Zustand eine blaue Farbe zeigt. Entsprechend gefärbtes Silikagel wird als Blaugel bezeichnet. Wenn Blaugel Wasser absorbiert, ergibt sich eine Farbänderung, bei der sich das Gel von blau nach blassrosa verfärbt.

Anstelle von Cobalt-II-Chlorid kann auch eine Variante von Methylviolett, die im trockenen Zustand orange ist, als Indikatormaterial verwendet werden. Das damit gefärbte Silikagel wird als Orangegel bezeichnet. Je nach Modifikation des Methylviolett verändert dieses Gel bei Absorption von Wasser seine Farbe von orange nach farblos oder dunkelgrün.

Durch Erwärmung wird das feuchte Substrat (z. B. Blau- oder Orangegel) regeneriert, so dass es im Wesentlichen seine dem trocknen Zustand entsprechende Farbe zeigt.

Eine bevorzugte Ausgestaltung des erfindungsgemäßen Ablaufs ist dadurch gekennzeichnet, dass das Anzeigemittel ein mit dem Substrat versehenes Anzeigemittel ist. Das Anzeigemittel lässt sich in diesem Fall relativ kostengünstig realisieren.

Eine weitere bevorzugte Ausgestaltung des erfindungsgemäßen Ablaufs ist dadurch gekennzeichnet, dass das Anzeigemittel aus dem transparenten Gehäusesegment und dem zumindest auf einen Abschnitt des transparenten Gehäusesegments aufgebrachten Substrat gebildet ist. Auch diese Ausgestaltung lässt sich relativ kostengünstig realisieren.

Nach einer weiteren vorteilhaften Ausgestaltung der Erfindung ist das transparente Gehäusesegment in einem Bodenbereich des Ablaufgehäuses und/oder in einem im Wesentlichen aufrecht oder winkelig zu einem Bodenbereich des Ablaufgehäuses verlaufenden Bereich angeordnet, wobei der im Wesentlichen aufrecht oder winkelig verlaufende Bereich an den Bodenbereich des Ablaufgehäuses angrenzt oder entfernt von diesem angeordnet ist. Hierdurch ist das transparente Gehäusesegment bzw. das Anzeigemittel in einem gut zugänglichen und bei vielen bekannten Formen von gattungsgemäßen Ablaufgehäusen gut einsehbaren Bereich des Ablaufgehäuses angeordnet.

Eine weitere vorteilhafte Ausgestaltung der Erfindung sieht vor, dass das transparente Gehäusesegment stoffschlüssig mit dem Ablaufgehäuse verbunden ist. Hierdurch lässt sich der erfindungsgemäße Ablauf kostengünstig realisieren, da für das transparente Gehäusesegment möglicherweise ein relativ teurer transparenter Kunststoff mit hoher Temperatur- und Lösungsmittelbeständigkeit, wie z. B. Polycarbonat, erforderlich ist, während für den restlichen Teil des Ablaufgehäuses ein relativ kostengünstiger, nicht-transparenter Kunststoff, wie z. B. Polyamid oder Polypropylen, mit entsprechend hoher Temperatur- und Lösungsmittelbeständigkeit, ausreichend ist oder gefordert sein kann. Zudem lässt sich die stoffschlüssige Verbindung des transparenten Gehäusesegments mit dem restlichen Teil des Ablaufgehäuses zuverlässig als wasserdichte Verbindung ausführen. Beispielsweise kann diese stoffschlüssige Verbindung als Klebe- oder Schweißverbindung ausgeführt werden. Auch liegt es im Rahmen der Erfindung, die stoffschlüssige, wasserdichte Verbindung von transparentem Gehäusesegment und Ablaufgehäuse mittels Umspritztechnik zu realisieren, indem z. B. das transparente Gehäusesegment als Einleger in ein Spritzgießwerkzeug einlegt wird und entlang seines Umfangs oder Verbindungsrandes mit undurchsichtigem Kunststoff zur Herstellung des Ablaufgehäuses umspritzt wird.

Eine andere vorteilhafte Ausgestaltung der Erfindung sieht vor, dass das transparente Gehäusesegment kraft- und/oder formschlüssig mit dem Ablaufgehäuse verbunden ist. Auch hierdurch lässt sich der erfindungsgemäße Ablauf kostengünstig realisieren, wenn für das transparente Gehäusesegment ein relativ teurer transparenter Kunststoff mit hoher Temperatur- und Lösungsmittelbeständigkeit gefordert wird, während für den restlichen Teil des Ablaufgehäuses ein relativ kostengünstiger, nicht-transparenter Kunststoff mit entsprechend hoher Temperatur- und Lösungsmittelbeständigkeit ausreichend ist. In diesem Zusammenhang ist eine weitere vorteilhafte Ausgestaltung dadurch gekennzeichnet, dass das transparente Gehäusesegment in das Ablaufgehäuse eingesteckt oder eingeschraubt ist, wobei ein Dichtelement, z. B. ein Dichtband oder O-Ring, zwischen dem transparenten Gehäusesegment und dem Ablaufgehäuse angeordnet ist.

Nach einer weiteren vorteilhaften Ausgestaltung der Erfindung ist das transparente Ablaufgehäuse oder Gehäusesegment für eine optische Vergrößerung oder optische Umlenkung, vorzugsweise für eine optische Vergrößerung eines Anzeigemittels zur Anzeige einer unzulässigen Feuchte oder für eine optische Umlenkung einer solchen Anzeige hergerichtet. Hierdurch lässt sich das transparente Gehäusesegment mit Vorteil relativ klein ausführen und/oder das Anzeigemittel an einem für ein Ablesen seiner Anzeige ohne Vergrößerung oder Umlenkung eigentlich ungünstigen Abschnitt des Ablaufgehäuses anordnen. Das transparente Gehäusesegment kann hierzu beispielsweise ein optisches Element aufweisen, welches die Wirkung einer Vergrößerungslinse und/oder eines Prismas und/oder eines Spiegels hat. Beispielsweise kann das transparente Gehäusesegment im Boden einer ein Ablaufgehäuse darstellenden Duschrinne integriert sein.

Das Ablaufgehäuse des erfindungsgemäßen Ablaufs kann einteilig oder mehrteilig ausgeführt sein. Eine mehrteilige Ausführung des Ablaufgehäuses vereinfacht die Fertigung des Ablaufgehäuses und bietet die Möglichkeit, in dem Ablaufgehäuse eine Drehfunktion zu integrieren, so dass beispielsweise ein Ablaufstutzen des Ablaufgehäuses um eine vertikale Drehachse geschwenkt werden kann. Des Weiteren kann bei einer mehrteiligen Ausführung des Ablaufgehäuses eines der Gehäuseteile aus transparentem Kunststoff und das andere oder die übrigen Gehäuseteile aus kostengünstigerem, nicht-transparentem Kunststoff gefertigt werden.

Nach einer weiteren vorteilhaften Ausgestaltung der Erfindung ist das Ablaufgehäuse mit einer abnehmbaren Abdeckung, insbesondere in Form einer Haube oder eines Rostes, und/oder mit einem entnehmbaren Tauchrohr versehen, wobei in Montageposition der Abdeckung und/oder des Tauchrohres das transparente Gehäusesegment oder ein Anzeigemittel zur Anzeige einer unzulässigen Feuchte durch die Abdeckung und/oder das Tauchrohr visuell verdeckt ist.

Das mindestens abschnittsweise transparente Gehäusesegment ist dabei vorzugsweise derart im Ablaufgehäuse angeordnet, dass ein Benutzer nach Demontage der notwendigen Komponenten, das transparente Gehäusesegment einsehen kann. Das zumindest abschnittsweise transparente Gehäusesegment kann beispielsweise in einem Bodenbereich, in einem zylindrischen Abschnitt eines Grundgehäuses, in einem Abschnitt eines Adapterflansches oder in einem anderem Wandungsbereich des Ablaufgehäuses integriert sein, wobei das transparente Gehäusesegment vorzugsweise durch die Abdeckhaube des Ablauf verdeckt wird, so dass bei vollständig montiertem Ablauf der Feuchtigkeitsindikator verdeckt ist.

Die Erfindung betrifft auch die Verwendung eines erfindungsgemäßen Ablaufs, insbesondere eines erfindungsgemäßen Ablaufs nach einem der voranstehend genannten Ausgestaltungen der Erfindung, wobei der erfindungsgemäße Ablauf in Kombination mit einer Bade- oder Duschwanne verwendet wird.

Nachfolgend wird die Erfindung anhand einer mehrere Ausführungsbeispiele darstellenden Zeichnung näher erläutert. Es zeigen:
- Fig. 1: eine perspektivische Draufsicht auf eine flächenbündig oder nahezu flächenbündig in einen gefliesten Boden eingebaute Duschtasse mit einem erfindungsgemäßen Ablauf;
- Fig. 2: eine vertikale Schnittansicht der in den gefliesten Boden eingebauten Duschtasse entlang der Schnittlinie II-II in Fig. 1 mit Ablaufgehäuse und Ablaufrohr;
- Fig. 3: eine perspektivische Unteransicht auf einen Abschnitt der Duschtasse mit dem daran montierten Ablaufgehäuse; und
- Fig. 4: eine perspektivische Draufsicht auf einen Abschnitt der Duschtasse im Bereich des Ablaufs, wobei eine haubenförmige Abdeckung und ein Tauchrohreinsatz des Ablaufs in einer explosionsartigen Entnahmeposition gezeigt sind.

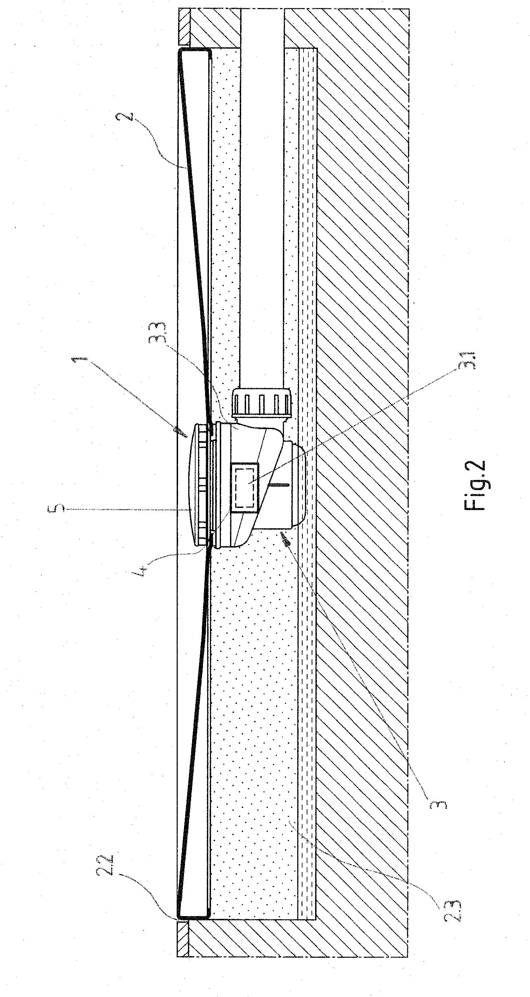

Die Zeichnung zeigt eine flach ausgebildete Duschwanne 2, die auch als Duschtasse bezeichnet werden kann und in eine Aussparung 1 des Bodens 10 eines Sanitärbereichs, z. B. eines Badezimmers eingebaut ist. Der in Fig. 2 im Querschnitt schematisch dargestellte Boden 10 ist typischerweise aus Estrich gebildet. Die Oberseite der Duschwanne 2 schließt im Wesentlichen flächenbündig mit der Oberseite eines auf dem Estrich angeordneten Bodenbelages 11 ab, der hier beispielsweise aus Fliesen gebildet ist.

Die Duschwanne 2 wird durch einen (nicht gezeigten) Wannenträger getragen, der auf der Bodenfläche der Aussparung 1 gelagert ist. Die Duschwanne 2 begrenzt mit der Aussparung 1 einen Hohlraum 12. Die Bodenfläche der Aussparung 1 definiert eine Abdichtungsebene gegenüber dem darunter befindlichen Baukörper, der beispielsweise als Betonboden ausgeführt ist.

Zur Abführung von Duschwasser weist die Duschwanne 2 eine Bodenöffnung 2.1 auf, an der ein Ablauf 3 montiert ist. Wie insbesondere in Fig. 2 zu erkennen ist, ist die Duschwanne (Duschtasse) 2, wie an sich bekannt, derart geformt, dass sie von ihren Außenkanten oder Außenrändern zu der Bodenöffnung 2.1 hin ein geringeres Gefälle aufweist. Als Bestandteil des Ablaufs 3 ist an der Unterseite der Duschwanne 2, im Bereich der Bodenöffnung 2.1, ein Ablaufgehäuse 3.1 angeordnet. Das Ablaufgehäuse 3.1 ist mittels Befestigungsschrauben 8 und eines Befestigungsringes (Befestigungsflansches) 9, der am oberseitigen Rand der Bodenöffnung 2.1 abgestützt ist, an der Bodenöffnung 2.1 befestigt. Das Ablaufgehäuse 3.1 weist einen Ablaufstutzen 3.2 mit einem Außengewinde auf, an dem ein Abflussrohr 7 mittels einer Überwurfmutter unter Zwischenordnung einer Ringdichtung (nicht gezeigt) angeschlossen ist.

Um ein Eindringen von Feuchtigkeit (Duschwasser) in den Hohlraum 12 unter oder hinter die Duschwanne 2 zu verhindern, ist an der Bodenöffnung 2.1 zwischen der Unterseite der Duschwanne 2 und der Oberseite eines umlaufenden Anlageflansches des Ablaufgehäuses 3.1 eine Ringdichtung anordnet. Zudem wird die umlaufende Fuge 2.2 zwischen dem Außenrand der Duschwanne 2 und dem angrenzenden Bodenbelag 11 mit einer Dichtmasse, typischerweise mit Silikon oder dergleichen wasserdicht versiegelt, um ein Eindringen von Feuchtigkeit (Duschwasser) in den Hohlraum 12 hinter die Duschwanne 2 zu verhindern.

Insbesondere die wasserdicht versiegelte Fuge 2.2 - die auch als Dichtungsfuge oder Silikonnaht bezeichnet werden kann- ist ein kritischer Bereich, da solche Fugen nicht selten mit der Zeit undicht werden. Man spricht bei diesen Fugen 2.2 daher auch von Wartungsfugen. Des Weiteren kommt es mitunter vor, dass solche Dichtungsfugen 2.2 aufgrund fehlerhafter Herstellung undicht sind.

Gelangt über eine defekte Ringdichtung am Ablaufgehäuse 3.1 oder über eine defekte Dichtungsfuge 2.2 unbemerkt Abwasser bzw. Feuchtigkeit in den durch die Bodenaussparung 1 und die Duschwanne 2 begrenzten Hohlraum 12, so kann dies weitreichende Feuchtigkeitsschäden verursachen, die häufig erst spät bemerkt werden und dann einen hohen Sanierungsaufwand erfordern.

In Fig. 2 ist eine Situation skizziert, in welcher es zu einem erheblichen Feuchtigkeitseintrag in den Hohlraum 12 gekommen ist. Aufgrund des Feuchtigkeitseintrags steht auf dem Boden des Hohlraums 12 Wasser oder der Boden des Hohlraums 12 weist eine unzulässig hohe Feuchte auf, wobei die Luft zwischen dem feuchten Boden bzw. dem dortigen Wasserspiegel und der Wannenunterseite eine hohe Luftfeuchtigkeit aufweist, was in Fig. 2 durch eine Punktschraffur (Vielzahl von kleinen Punkten) angedeutet ist.

Um ohne eine Demontage der Duschwanne 2 den Hohlraum 12 hinsichtlich eines Feuchtigkeitseintrags prüfen oder überwachen zu können, ist das Ablaufgehäuse 3.1 des Ablaufs 3 zumindest teilweise transparent ausgebildet ist, derart, dass zumindest ein Gehäusesegment 3.3, welches eine Außenfläche des Ablaufgehäuses 3.1 definiert, transparent ist. Das transparente Gehäuse 3.1 bzw. das transparente Gehäusesegment 3.3 ist dabei zur Feststellung einer unzulässigen Feuchte in einer Umgebung der Außenfläche des Ablaufgehäuses 3.1 hergerichtet. Prinzipiell ist es möglich, den Hohlraum 12 unter der Duschwanne 2 auf Vorhandensein eines Feuchtigkeitseintrags allein über das transparente Gehäuse 3.1 oder das Gehäusesegment 3.3 optisch zu überwachen. Um die Hohlraumüberwachung zu vereinfachen und die Zuverlässigkeit der Überwachung zu bessern, sieht eine bevorzugte Ausgestaltung der Erfindung vor, ist auf der Außenfläche des transparenten Gehäuses 3.1 oder Gehäusesegments 3.3 ein Anzeigemittel (Indikator) 4 angeordnet.

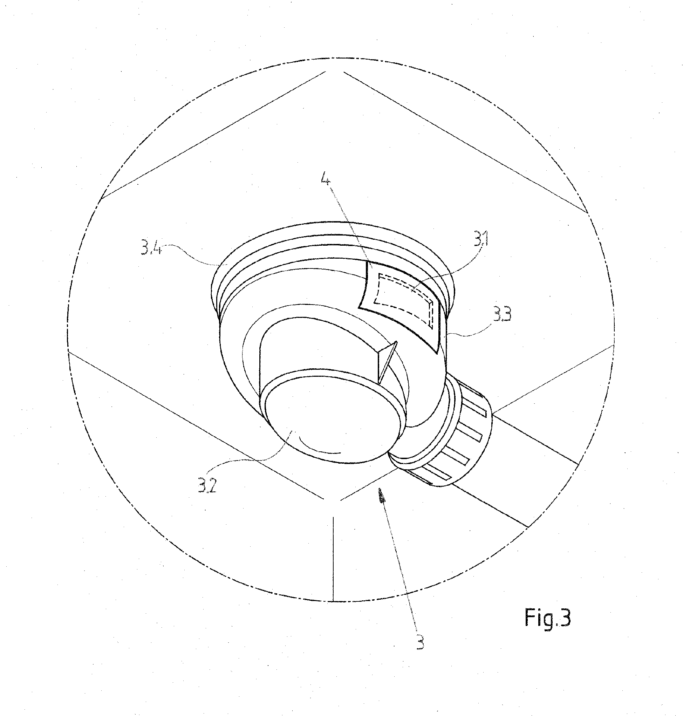

Wie in Fig. 3 gezeigt, ist das transparente Gehäusesegment 3.3 mit einem Anzeigemittel 4 zur Anzeige einer unzulässigen Feuchte, insbesondere Luftfeuchte, in der Umgebung der Außenfläche des Ablaufgehäuses 3.1 versehen. Das transparente Gehäusesegment 3.3 und das Anzeigemittel 4 sind vorzugsweise in einem im Wesentlichen aufrecht oder winkelig zu einem Bodenbereich 3.4 des Ablaufgehäuses 3.1 verlaufenden Bereich 3.5 angeordnet.

Das Anzeigemittel 4 ist aus hygroskopischem Substrat, z. B. aus Silikagel gebildet, das einen Farbstoff als Indikatormaterial enthält, dessen Farbe sich in Abhängigkeit des Wassergehaltes des Substrats verändert. Die Farbänderung des Anzeigemittels 4 ist somit reversibel. Als Indikatormaterial wird in dem Anzeigemittel 4 beispielsweise Cobalt-II-Chlorid verwendet.

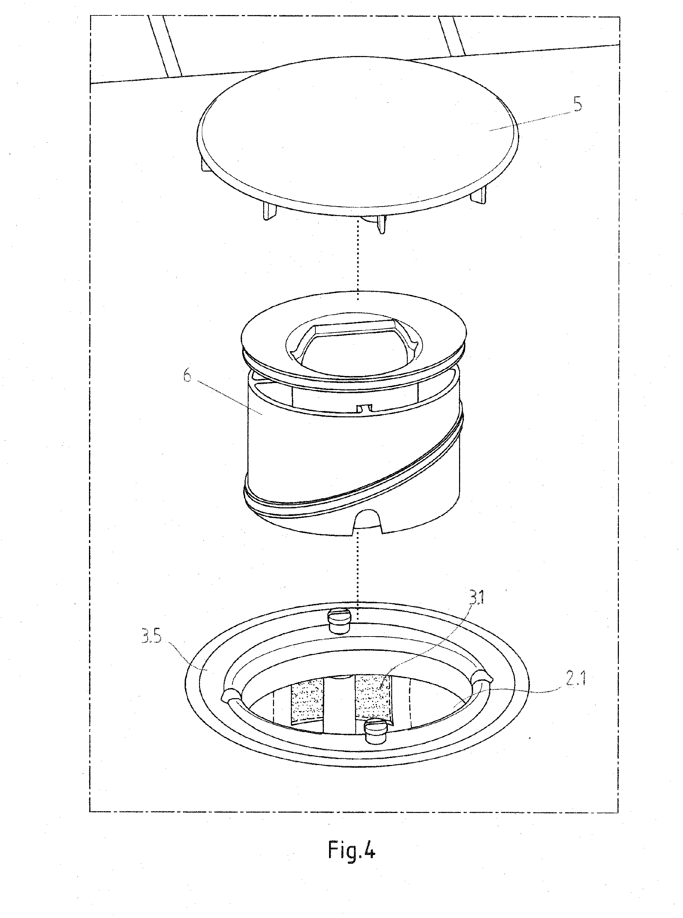

Das Ablaufgehäuse 3.1 definiert einen Geruchverschluss. Hierzu ist das Ablaufgehäuse 3.1 mit einem Tauchrohr 6 versehen, das von oben in das Ablaufgehäuse eingesetzt wird (vgl. Fig. 4). Das Tauchrohr 6 kann insbesondere für eine Reinigung des Ablaufs 3 aus dem Ablaufgehäuse 3.1 entnommen werden und weist hierzu vorzugsweise einen bügelförmigen Handgriff 6.1 auf. Des Weiteren ist das Ablaufgehäuse 3.1 an seiner Oberseite mit einer abnehmbaren Abdeckung 5 versehen. Die Abdeckung 5 ist beispielsweise als kreisscheibenförmige Haube ausgebildet, die über an ihrer Unterseite angeordnete Abstandshalter 5.1 auf dem Befestigungsring 9 aufliegt. Die Abstandshalter 5.1 definieren im montierten Zustand des Ablaufs 3 einen Einlaufspalt 14, über den Duschwasser in das Ablaufgehäuse 3.1 bzw. zunächst in das Tauchrohr 6 fließen kann. Zur horizontalen Lagefixierung der Abdeckung (Haube) 5 weist diese an ihrer Unterseite nach unten offene, hülsenförmige Halter 5.2 auf, welche die nach oben vorstehenden Köpfe der Befestigungsschrauben 8 des Ablaufgehäuses 3.1 formschlüssig sowie reibschlüssig aufnehmen (vgl. Fig. 4).

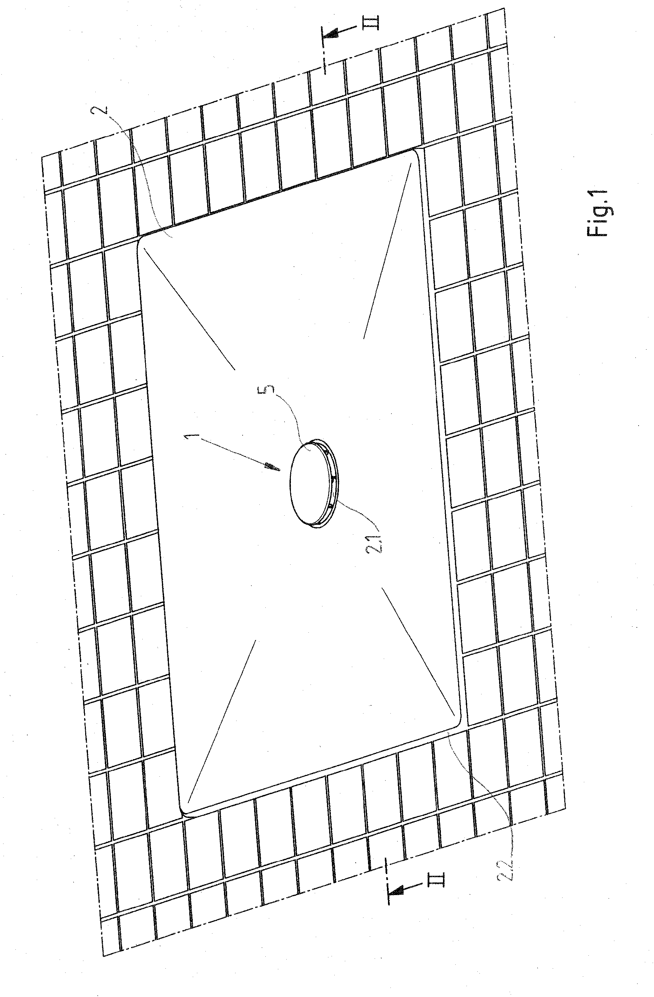

In der in den Figuren 1 und 2 gezeigten Montageposition sind das transparente Gehäuse 3.1 bzw. Gehäusesegment 3.3 und das Anzeigemittel 4 nicht sichtbar, denn sie werden durch das Tauchrohr 6 und die Haube 5 verdeckt. Nach einer einfachen Demontage von Haube 5 und Tauchrohr 6 wird das Anzeigemittel 4 zur Anzeige möglicher Feuchte in dem zu überwachenden Hohlraum 12 allerdings gut sichtbar. Das transparente Gehäusesegment 3.3 und das Anzeigemittel 4 sind so angeordnet, dass nach Entnahme des Tauchrohres 6 das Sperrwasser des Geruchverschlusses nicht auf Höhe des Anzeigemittels 4 steht.

Somit lässt sich ein möglicher Feuchtigkeitseintrag in den Hohlraum 12 unter einer Duschwanne 2 auf einfache Weise frühzeitig identifizieren, bevor es zu weitreichenden unbemerkten Feuchtigkeitsschäden kommt.

Die Ausführung der Erfindung ist nicht auf die in der Zeichnung dargestellten Ausführungsbeispielen beschränkt. Vielmehr sind zahlreiche Varianten des erfindungsgemäßen Ablaufs denkbar, die auch bei von der Zeichnung abweichender Gestaltung von der beanspruchten Erfindung gemäß einem der beiliegenden Ansprüche Gebrauch macht. Beispielsweise kann der erfindungsgemäße Ablauf auch als Ablauf für eine Badewanne ausgeführt sein oder werden. In diesem Fall ist das Ablaufgehäuse vorzugsweise Bestandteil einer Ab- und Überlaufgarnitur und weist dementsprechend einen Anschluss für ein Überlaufrohr auf. Des Weiteren kann der erfindungsgemäße Ablauf 3 als Bodenablauf für eine bodengleiche Dusche ohne Duschwanne 2 ausgeführt werden. Insbesondere kann der erfindungsgemäße Ablauf in Form einer sogenannten Duschrinne ausgeführt werden.

## Patentansprüche

1. Ablauf (3) für einen Sanitärbereich, insbesondere für eine Bade- oder Duschwanne (2) oder als Bodenablauf, mit einem Ablaufgehäuse (3.1), wobei das Ablaufgehäuse (3.1) zumindest teilweise transparent ausgebildet ist, derart, dass zumindest ein Gehäusesegment (3.3), welches eine Außenfläche des Ablaufgehäuses (3.1) definiert, transparent ist, wobei das transparente Gehäusesegment (3.3) zur Feststellung einer unzulässigen Feuchte in einer Umgebung der Außenfläche des Ablaufgehäuses (3.1) hergerichtet ist, **dadurch gekennzeichnet,**
**dass** das transparente Gehäusesegment (3.3) kraft- und/oder formschlüssig mit dem Ablaufgehäuse (3.1) verbunden ist.

2. Ablauf nach Anspruch 1,
**dadurch gekennzeichnet, dass** das transparente Ablaufgehäuse (3.1) oder Gehäusesegment (3.3) mit einem Anzeigemittel (4) zur Anzeige einer unzulässigen Feuchte, vorzugsweise Luftfeuchte, in der Umgebung der Außenfläche des Ablaufgehäuses (3.1) versehen ist.

3. Ablauf nach Anspruch 2,
**dadurch gekennzeichnet, dass** das Anzeigemittel (4) lösbar oder fest mit dem transparenten Ablaufgehäuse (3.1) oder Gehäusesegment (3.3) verbunden ist.

4. Ablauf nach Anspruch 2 oder 3,
dass das Anzeigemittel (4) zur Anzeige einer unzulässigen Feuchte als Messinstrument, vorzugsweise als Hygrometer, besonders bevorzugt als analoges Hygrometer ausgeführt ist.

5. Ablauf nach Anspruch 2 oder 3,
**dadurch gekennzeichnet, dass** das Anzeigemittel (4) aus einem Substrat gebildet ist, wobei das Substrat ein Indikatormaterial aufweist, welches die Eigenschaft hat oder ausgeführt ist, eine unzulässige Feuchte anzuzeigen.

6. Ablauf nach Anspruch 5,
**dadurch gekennzeichnet, dass** das Indikatormaterial des Substrats in Bezug auf eine unzulässige Feuchte reversibel reagiert.

7. Ablauf nach Anspruch 5 oder 6,
**dadurch gekennzeichnet, dass** das Substrat und/oder das Indikatormaterial hygroskopisch ist.

8. Ablauf nach einem der Ansprüche 5 bis 7,
**dadurch gekennzeichnet, dass** das Anzeigemittel (4) ein mit dem Substrat versehenes Anzeigemittel (4) ist.

9. Ablauf nach einem der Ansprüche 5 bis 7,
**dadurch gekennzeichnet, dass** das Anzeigemittel (4) aus dem transparenten Gehäusesegment (3.3) und dem zumindest auf einen Abschnitt des transparenten Gehäusesegments (3.3) aufgebrachten Substrat gebildet ist.

10. Ablauf nach einem der Ansprüche 1 bis 9,
**dadurch gekennzeichnet, dass** das transparente Gehäusesegment (3.3) in einem Bodenbereich (3.4) des Ablaufgehäuses (3.1) und/oder in einem im Wesentlichen aufrecht oder winkelig zu einem Bodenbereich (3.4) des Ablaufgehäuses (3.1) verlaufenden Bereich (3.5) angeordnet ist, wobei der im Wesentlichen aufrecht oder winkelig verlaufende Bereich (3.5) an den Bodenbereich (3.4) des Ablaufgehäuses (3.1) angrenzt oder entfernt von diesem angeordnet ist.

11. Ablauf nach einem der Ansprüche 1 bis 10,
**dadurch gekennzeichnet, dass** transparente Gehäusesegment (3.3) in das Ablaufgehäuse (3.1) eingesteckt oder eingeschraubt ist, wobei zwischen dem transparenten Gehäusesegment (3.3) und dem Ablaufgehäuse (3.1) ein Dichtelement angeordnet ist.

12. Ablauf nach einem der Ansprüche 1 bis 11,
**dadurch gekennzeichnet, dass** das transparente Gehäusesegment (3.3) für eine optische Vergrößerung oder optische Umlenkung, vorzugsweise für eine optische Vergrößerung eines Anzeigemittels (4) zur Anzeige einer unzulässigen Feuchte oder für eine optische Umlenkung einer solchen Anzeige hergerichtet ist.

13. Ablauf nach einem der Ansprüche 1 bis 12,
**dadurch gekennzeichnet, dass** das Ablaufgehäuse (3.1) mit einer abnehmbaren Abdeckung (5), insbesondere in Form einer Haube oder eines Rostes, und/oder mit einem entnehmbaren Tauchrohr (6) versehen ist, wobei in Montageposition der Abdeckung (5) und/oder des Tauchrohres (6) das transparente Gehäusesegment (3.3) oder ein Anzeigemittel (4) zur Anzeige einer unzulässigen Feuchte durch die Abdeckung (5) und/oder das Tauchrohr (6) visuell verdeckt ist.
